**Europäisches Patentamt**

**European Patent Office**

**Office européen des brevets**

(11) Veröffentlichungsnummer: **0 199 918**

**A1**

(12) # EUROPÄISCHE PATENTANMELDUNG

(21) Anmeldenummer: **86102158.2**

(51) Int. Cl.⁴: **B 62 D 55/32**

(22) Anmeldetag: **19.02.86**

(30) Priorität: **25.02.85 DE 3506539**

(43) Veröffentlichungstag der Anmeldung:
**05.11.86 Patentblatt 86/45**

(84) Benannte Vertragsstaaten:
**AT BE CH FR GB IT LI LU NL SE**

(71) Anmelder: **W. Rockelsberg GmbH & Co KG**
**Am Strücksken 32**
**D-4100 Duisburg 14(DE)**

(72) Erfinder: **Rockelsberg, Friedrich-Wilhelm**
**In der Klan-Klang 32**
**D-4100 Duisburg 14(DE)**

(74) Vertreter: **König, Reimar, Dr.-Ing. et al,**
**Patentanwälte Dr.-Ing. Reimar König Dipl.-Ing. Klaus**
**Bergen Wilhelm-Tell-Strasse 14 Postfach 260162**
**D-4000 Düsseldorf 1(DE)**

(54) **Verfahren und Vorrichtung zur Wiederverwendung des Materials von Panzerketten.**

(57) Panzerketten (1) die Schraubverbindungen (6) gelöst, anschließend die Verbindungselemente der einzelnen Kettenglieder (2 bis 5) herausgedrückt und die anhaftenden Gummischichten ebenfalls herausgedrückt oder abgeschält.

EP 0 199 918 A1

FIG. 3

Dr.-Ing. Reimar König · Dipl.-Ing. Klaus Bergen

Wilhelm-Tell-Str. 14   4000 Düsseldorf 1   Telefon 397026   Patentanwälte

BEZEICHNUNG GEÄNDERT
Siehe Titelseite

- 1 -

36 547 K

Wilhelm Rockelsberg GmbH & Co. KG, Am Strücksken 32,
=================================================

4100 Duisburg 14
=======================

"Verfahren und Vorrichtung zum Aufbereiten von Panzerketten"

Die Erfindung betrifft ein Verfahren und eine Vorrichtung zum Aufbereiten von Panzerketten, deren Kettenglieder mittels Verbindungsstangen und Verbindungsschlösser miteinander verschraubt und durch mit Gummi umgebene Tragrohre und/oder Mittelhülsen versteift sind.

Es ist üblich, unbrauchbare metallene Gegenstände zu wiederverwendungsfähigem Schrott aufzubereiten. Bei Panzerketten werden hauptsächlich Schneidbrenner benutzt, die die Ketten in Einzelstücke teilen. Das die Verbindungsstangen umgebende Gummi wird dabei teilweise verbrannt. Der bei diesem Verfahren entstehende Schrott enthält meist mehr als die vom Stahlwerker verlangten maximal 5% Gummi. Auch beim mechanischen Zerkleinern, dem sogenannten Shreddern, von Panzerketten wird das anhaftende Gummi anschließend oder später beim Schmelzen des Schrotts verbrannt, wobei giftige Dämpfe entstehen. Bei beiden Verfahren fällt ein sauberer Schrott nur nach einem umweltbelastenden Verbrennen der Gummiteile an. Der an sich wertvolle Kettenschrott läßt sich daher wegen seines hohen Gummianteils und der daraus resultierenden Schwefelbelastung für den Stahl und die Ofenabgase bzw. die Umwelt im Stahlwerk nicht einsetzen.

Der Erfindung liegt die Aufgabe zugrunde, ein Verfahren zum Aufbereiten von Panzerketten zu schaffen, bei dem ein sauberer Schrott ohne umweltbelastendes Verbrennen von Gummi anfällt.

- 2 -

Diese Aufgabe wird dadurch gelöst, daß bei einem Verfahren und einer Vorrichtung der eingangs genannten Art erfindungsgemäß die Schraubverbindungen gelöst und anschließend die metallischen Verbindungselemente abgepreßt oder herausgedrückt und die anhaftenden Gummischichten abgeschält oder herausgedrückt werden.

Vorzugsweise werden die Schraubverbindungen der Kettenglieder mittels stationärer Schlagschrauber mechanisch gelöst. Die je zwei Kettengliederpaare in Längsrichtung verbindenden Schlösser können mittels eines mindestens einen Stößel mit Zentrierspitze aufweisenden Stempels abgepreßt werden. Ebenfalls mittels eines mindestens einen Stößel mit Zentrierspitze aufweisenden Stempels können die mit Gummi umgebenen, die benachbarten Kettenglieder eines Paares in Querrichtung verbindenden Stangen herausgedrückt und im selben Arbeitsgang beim Durchlaufen eines Abstreifers vom Gummi befreit werden. Anschließend werden die Kettenglieder erwärmt, damit sich die von Gummi umgebenen Tragrohre und/oder die Mittelhülse sowie das im Kettenglied verbliebene Gummi leichter mittels weiterer Stößel entfernen lassen.

Durch das differenzierte Demontieren der Panzerketteneinzelteile und das Herausdrücken bzw. Abschaben der Gummiteile entsteht nicht nur sauberer Schrott, sondern auch sauberes, wiederverwendbares Gummi. Je nach Art und Aufbau der Panzerkette werden die Anzahl der Drückvorgänge sowie die Anzahl und die Ausführung der Stempel gewählt.

Die Erfindung wird nachfolgend anhand eines in der Zeichnung dargestellten Ausführungsbeispiels des näheren erläutert. In der Zeichnung zeigen:

- 3 -

Fig. 1     eine Draufsicht eines Panzerkettenausschnitts,

Fig. 2     eine Draufsicht eines Panzerkettenausschnitts einer anderen Panzerkette,

Fig. 3     einen Horizontalschnitt zu Fig. 1 beim Abpressen der Verbindungsschlösser,

Fig. 4     einen Horizontalschnitt zweier Kettenglieder gemäß Fig. 1 beim Herausdrücken der Verbindungsstangen,

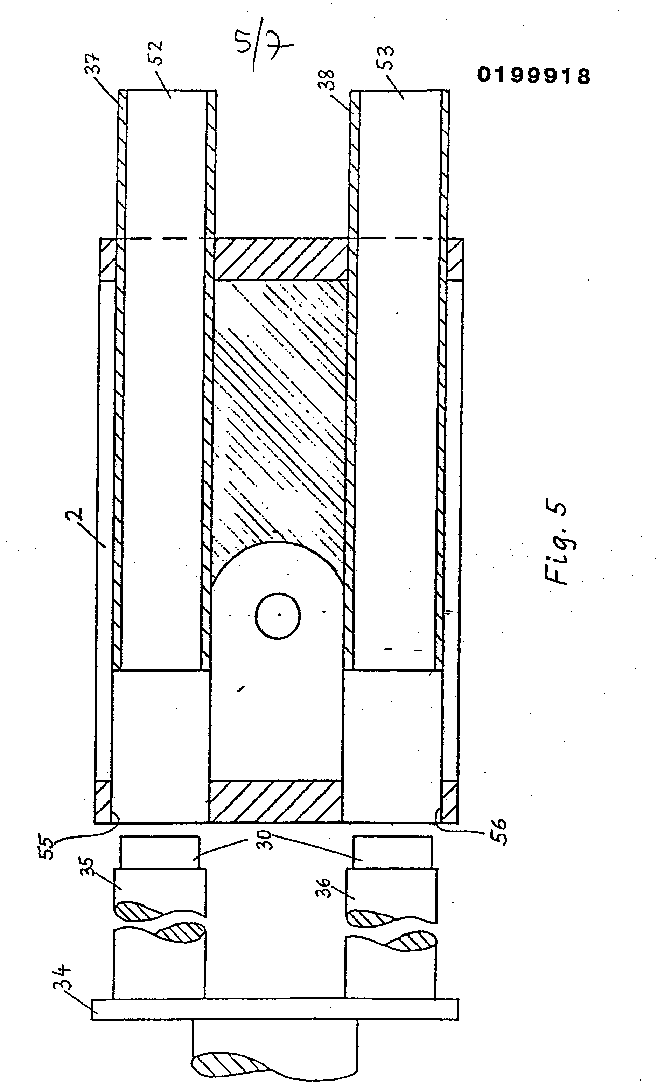

Fig. 5     einen vergrößerten Horizontalschnitt des Kettengliedes gemäß Fig. 1 beim Herausdrücken der Tragrohre,

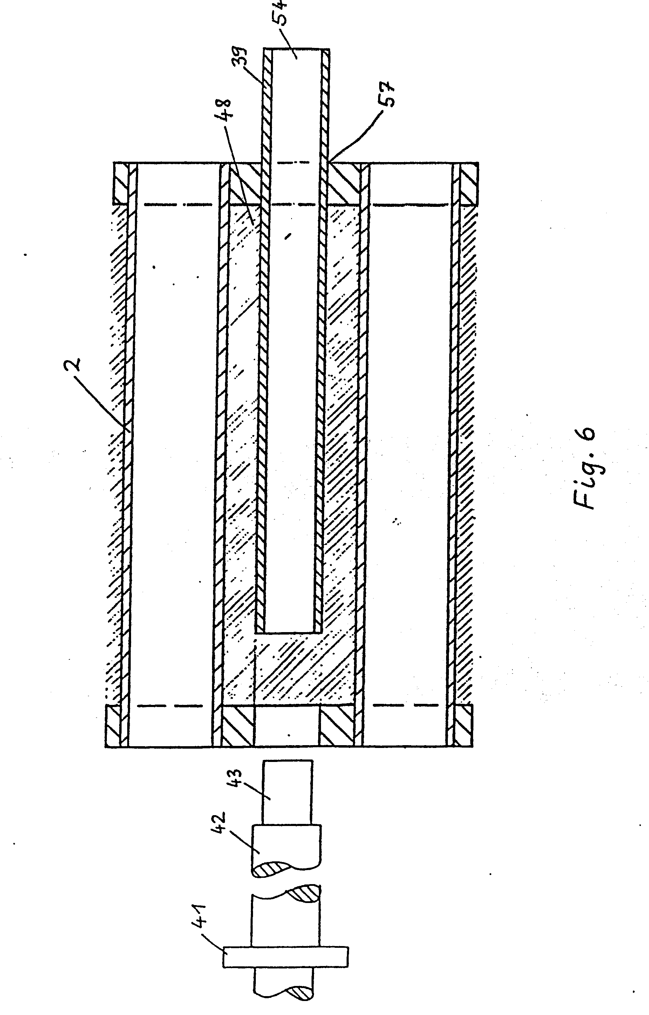

Fig. 6     einen vergrößerten Horizontalschnitt des Kettengliedes gemäß Fig. 2 beim Herausdrücken der Mittelhülse,

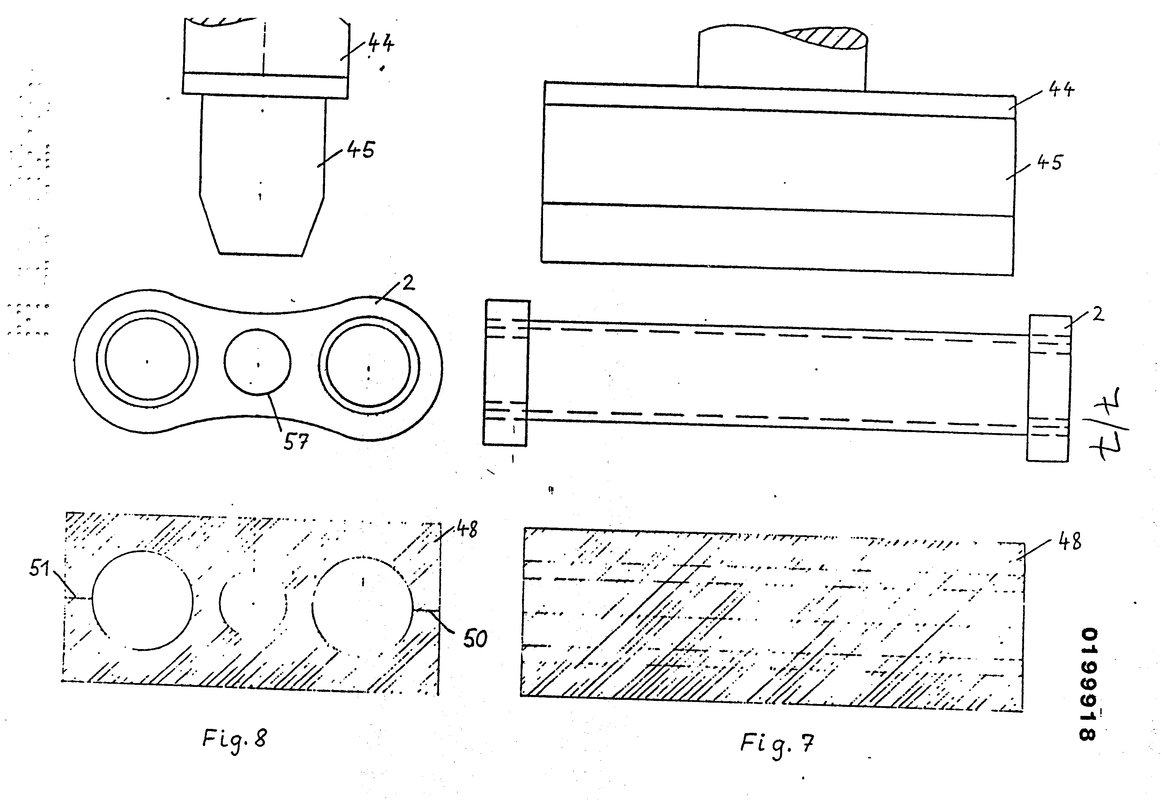

Fig. 7     eine Seitenansicht des Kettengliedes gemäß Fig. 2 nach dem Herausdrücken des Gummis und

Fig. 8     eine Vorderansicht des in Fig. 7 dargestellten Kettengliedes.

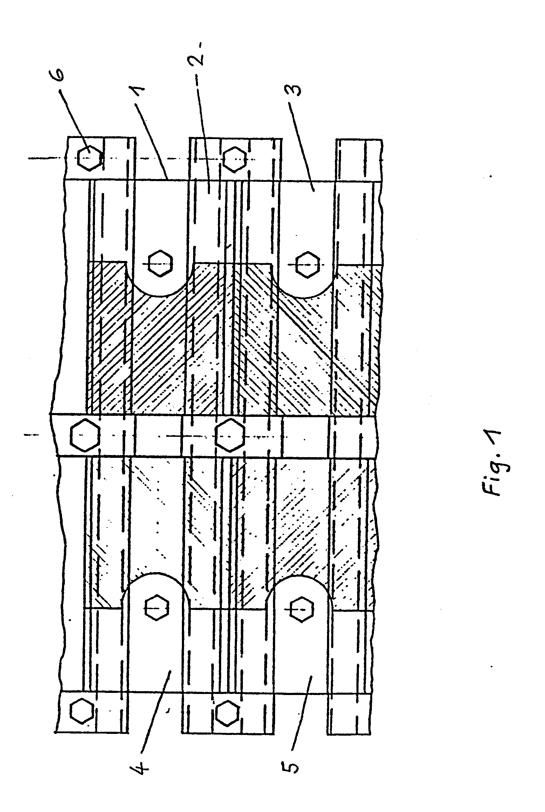

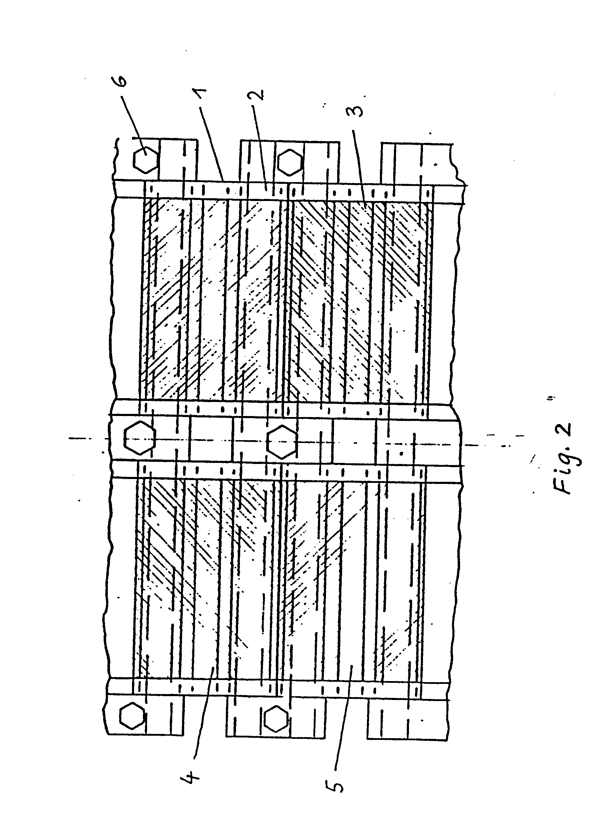

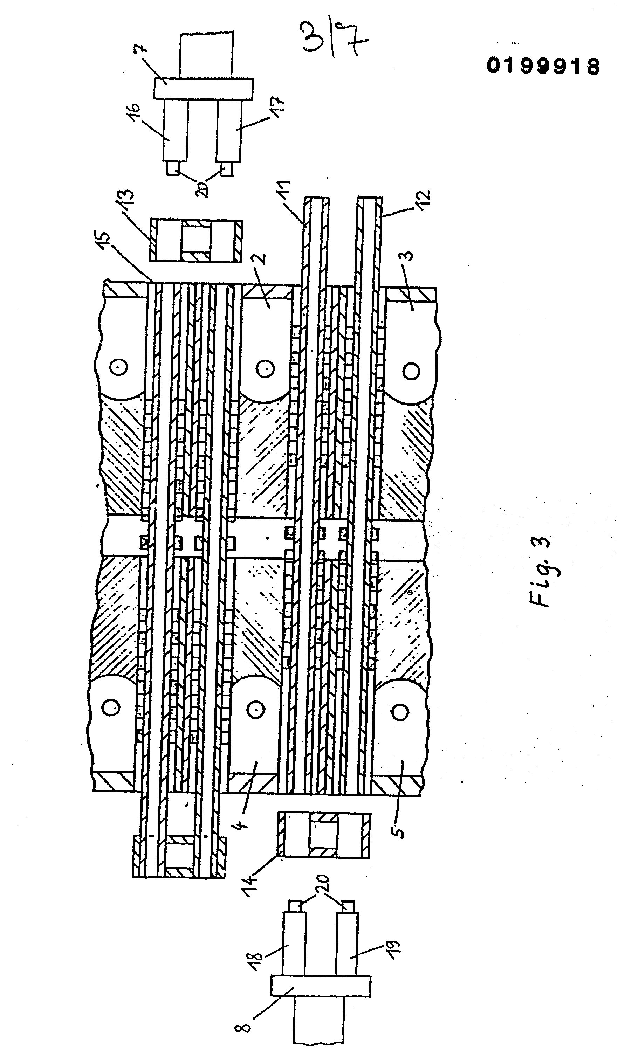

Die in Fig. 1 und 2 dargestellte Panzerkette 1 besteht aus Kettengliedern 2 bis 5, die mittels Schrauben 6 sowohl in Längs- als auch in Querrichtung miteinander verbunden sind. Nicht dargestellte stationäre Schlagschrauber lösen die Schrauben 6. Nach dem Lösen der Schrauben und Entfernen aller leicht lösbaren metallenen Einzelteile, insbesondere aufgeschraubte Platten, wird die Kette 1 hydraulisch angetriebenen Stempeln 7, 8 zugeführt, mit deren Hilfe die die rohrförmigen Verbindungsstangen 11, 12 umschließenden Verbindungsschlösser 13, 14 mittels eines auf die Verbindungsstangen 11, 12 von den zylindrischen, mit jeweils einer zylindrischen Zentrierspitze 20 versehenen Stößeln 16 bis 19 der Stempel 7, 8 ausgeübten Drucks beidseitig - wie in Fig. 3 dargestellt - entfernt werden. Der auf die Verbindungsstangen 11, 12 ausgeübte Druck überwindet die zwischen den Verbindungsstangen 11, 12 und dem Schloß 13 vorhandene Haftkraft, indem sich die Wirkungsrichtung des Drucks umkehrt und das Schloß 13, 14 gegen die Seitenfläche 15 der Kettenglieder 2 bis 5 gedrückt wird und schließlich abspringt.

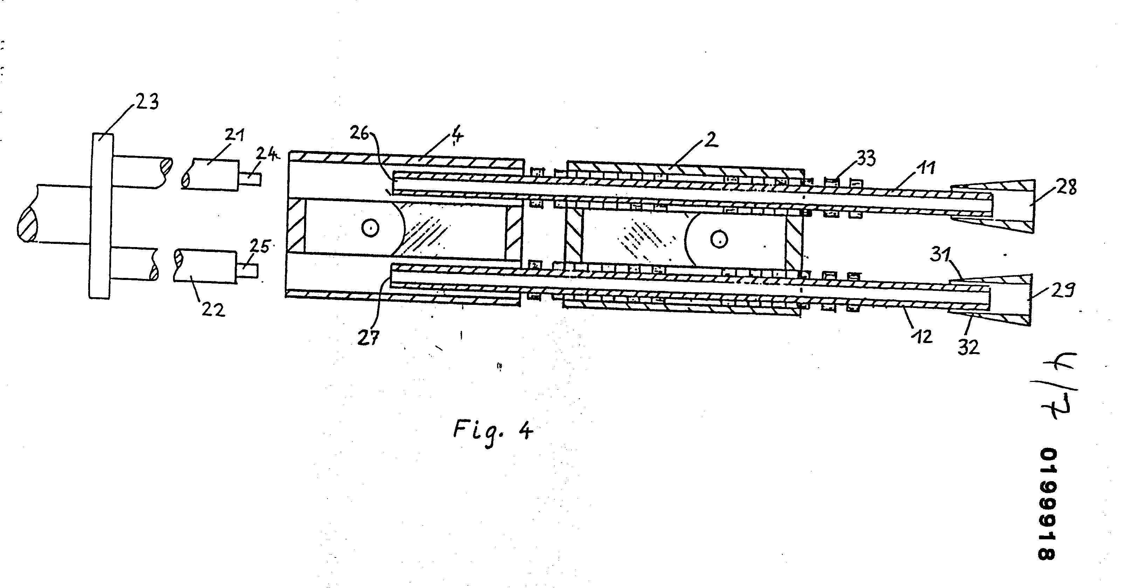

Danach werden die mit Gummi umgebenen Verbindungsstangen 11, 12 - wie in Fig. 4 dargestellt - herausgedrückt. Unterbrochen dargestellte, zylindrische Stößel 21, 22 eines Stempels 23, deren Länge die Länge der Verbindungsstangen 11, 12 übersteigt, greifen mit ihren zylindrischen Zentrierspitzen 24, 25 in Innenbohrungen 26, 27 der Verbindungsstangen 11, 12 und drücken diese in Richtung außen konisch und innen zylindrisch geformter, mit den Verbindungsstangen 11, 12 fluchtender Abstreifer 28, 29, die mit ihren konischen Schneidkanten 31, 32 die auf den Verbindungsstangen 11, 12 aufvulkanisierten Gummiringe 33 während des Durchschubs entfernen. Der in den Fig. 3 und 4 dargestellte Verfahrensschritt betrifft auch die Kettenglieder 2 bis 5 der Panzerkette gemäß Fig. 2.

Nachdem die Verbindungsstangen 11, 12 entfernt und damit die Kettenglieder 2, 4 voneinander getrennt sind, wird jedes Kettenglied 2 bis 5 einer nicht dargestellten, vorzugsweise induktiven Heizstation zugeführt, um sie auf maximal 200°C zu erwärmen. Diese Temperatur reicht aus, das aufvul-

- 5 -

kanisierte Gummi irreversibel von dem Kettenglied 2 bis 5, den Tragrohren 37, 38 bzw. der Mittelhülse 39 zu lösen, so daß die Tragrohre 37, 38 mit Hilfe eines weiteren angetriebenen Stempels 34 mit zwei je eine zylindrische Zentrierspitze 30 aufweisenden Stößeln 35, 36 bzw. die Mittelhülse 39 mit Hilfe eines Stempels 41 und seines Stößels 42 und dessen Zentrierspitze 43 relativ leicht aus dem Kettenglied 2 bis 5 und/oder dem Gummi 48 gedrückt werden können. Andererseits ist die Temperatur niedrig genug, daß keine umweltverschmutzenden Substanzen freigesetzt werden und ein wiederverwendbares Gummi anfällt.

Bei der Panzerkette gemäß Fig. 1 fällt das Gummi nach dem Entfernen der Tragrohre 37, 38 ohne weiteres Zutun ab, während bei der Kette gemäß Fig. 2 eine weitere mit einem Stempel 44 und dessen Stößel 45 bestückte Station das im Kettenglied 2 bis 5 verbliebene Gummi 48 mittels Druck zum Abreißen an den Klebeflächen 50, 51 und damit zum Abfallen bringt.

Alle zylindrischen Zentrierspitzen 20, 24, 25, 30 und 43 besitzen jeweils einen mit den Innenbohrungen 26, 27 der Verbindungsstangen 11, 12 bzw. den Innenbohrungen 52, 53 der Tragrohre 37, 38 bzw. der Innenbohrung 54 der Mittelhülse 39 korrespondierenden Durchmesser und dienen dem Zentrieren der Stößel 16 bis 19, 21, 22, 35, 36 und 42. Die Durchmesser der Stößel 16 bis 19, 21, 22, 35, 36 und 42 sind so gewählt, daß sie mit minimalem Spiel in Innenbohrungen 52, 53 der Tragrohre 37, 38 und in die Schlösser 13, 14, sowie in die Führungen 55, 56 bzw. 57 der Tragrohre 37, 38 bzw. der Mittelhülse 39 reichen und die den Druck übertragende, sich aus der Differenz der beiden Durchmesser ergebende Ringfläche etwa gleich der Schnittfläche der Verbindungsstangen 11, 12 bzw. der Tragrohre 37, 38 bzw. der Mittelhülse 39 ist.

Der nach Durchlaufen sämtlicher Stationen entstehende, aus Platten, Kettengliedern 2 bis 5, Schrauben 6, Verbindungsstangen 11, 12, Verbindungsschlössern 13, 14, Tragrohren 37, 38 bzw. Mittelhülse 39 bestehende Schrott ist nahezu frei von Gummi und erfüllt die vom Stahlwerker geforderte Bedingung einer maximal 5%- igen Verunreinigung. Das sauber entfernte, d.h. metallfreie und einer maximalen Erwärmung auf 200°C ausgesetzte Gummi 33, 48 ist ebenfalls wiederverwendbar.

3 fu

- 7 -

Wilhelm Rockelsberg GmbH & Co. KG., Am Stücksken 32,

4100 Duisburg 14

"Verfahren und Vorrichtung zum Aufbereiten von Panzerketten"

Patentansprüche:

1.  Verfahren zum Aufbereiten von Panzerketten, deren Kettenglieder mittels Verbindungsstangen und Verbindungsschlösser miteinander verschraubt und durch mit Gummi umgebene Tragrohre und/oder Mittelhülsen versteift sind, dadurch gekennzeichnet, daß die Schraubverbindungen gelöst und anschließend die metallischen Verbindungselemente abgepreßt oder herausgedrückt und die anhaftenden Gummischichten abgeschält oder herausgedrückt werden.

2.  Verfahren nach Anspruch 1, dadurch gekennzeichnet, daß die Schraubverbindungen der Kettenglieder gelöst werden.

3.  Verfahren nach Anspruch 1 oder 2, dadurch gekennzeichnet, daß die die Kettenglieder in Längsrichtung verbindenden Schlösser abgepreßt werden.

4.  Verfahren nach einem oder mehreren der Ansprüche 1 bis 3, dadurch gekennzeichnet, daß die mit Gummiringen umgebenen, benachbarte Kettenglieder verbindenden Stangen herausgedrückt und im selben Arbeitsgang vom Gummi befreit werden.

5. Verfahren nach einem oder mehreren der Ansprüche 1 bis 4, dadurch gekennzeichnet, daß die Kettenglieder vor dem Entfernen der Tragrohre und/oder der Mittelhülse sowie des anhaftenden Gummis erwärmt werden.

6. Verfahren nach einem oder mehreren der Ansprüche 1 bis 5, dadurch gekennzeichnet, daß die Tragrohre und/oder die Mittelhülse eines Kettengliedes herausgedrückt werden.

7. Verfahren nach einem oder mehreren der Ansprüche 1 bis 6, dadurch gekennzeichnet, daß am Kettenglied anhaftendes Gummi herausgedrückt wird.

8. Vorrichtung zur Durchführung des Verfahrens nach einem oder mehreren der Ansprüche 1 bis 7, gekennzeichnet durch stationäre Schlagschrauber.

9. Vorrichtung nach Anspruch 8, gekennzeichnet durch mindestens einen Stößel (16 bis 19, 21, 22, 35, 36 und 42) mit Zentrierspitze (20, 24, 25, 30 und 43) aufweisenden Stempel (7, 8, 23, 34, 41 und 44).

10. Vorrichtung nach Anspruch 8 oder 9, gekennzeichnet durch einen Schneidkanten (31, 32) aufweisenden Abstreifer (28, 29).

Fig. 1

1/4

0199918

Fig. 2

Fig. 3

Fig. 4

Fig. 5

0199918

Fig. 6

44

45

2

57

Fig. 8

51

48

50

44

45

2

7/7

48

Fig. 7

0199918

**Europäisches Patentamt**

## EUROPÄISCHER RECHERCHENBERICHT

Nummer der Anmeldung

EP  86 10 2158

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | SOVIET INVENTIONS ILLUSTRATED, Mechanical Section, Woche P56 , 29. August 1984, Zusammenfassungsnr. 84-181601/29, Derwent Publications Ltd., London, GB; & SU - A - 1 054 176 (CHELYABINSK POLY) 15.11.1983 ----- | | B 62 D  55/32 |

RECHERCHIERTE SACHGEBIETE (Int Cl 4)

B 62 D  55/00

Der vorliegende Recherchenbericht wurde für alle Patentansprüche erstellt.

| Recherchenort BERLIN | Abschlußdatum der Recherche 12-05-1986 | Prüfer KRIEGER P O |
|---|---|---|